(19)

**Europäisches Patentamt**
**European Patent Office**
**Office européen des brevets**

(11) **EP 4 621 609 A1**

(12) **EUROPEAN PATENT APPLICATION**

(43) Date of publication:
**24.09.2025  Bulletin 2025/39**

(21) Application number: **24164422.8**

(22) Date of filing: **19.03.2024**

(51) International Patent Classification (IPC):
**G06F 18/213** (2023.01)  **G06F 16/245** (2019.01)
**G06F 16/33** (2025.01)  **G06T 11/00** (2006.01)
**G06V 10/774** (2022.01)  **G06V 10/82** (2022.01)

(52) Cooperative Patent Classification (CPC):
**G06V 10/774; G06F 18/213; G06T 11/00;**
**G06V 10/82;** G06F 16/245; G06F 16/3334;
G06F 16/3344

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
  **70197 Stuttgart (DE)**
• **Li, Yumeng**
  **72070 Tuebingen (DE)**
• **Zhang, Dan**
  **71229 Leonberg (DE)**

Remarks:
Amended claims in accordance with Rule 137(2)
EPC.

(54) **METHOD AND DEVICE FOR GENERATING SYNTHETIC VIDEO DATA FORM A TEXT PROMPT**

(57)    The invention relates to a method for generating synthetic video data form a text prompt, particularly for providing video data for training and/or testing and/or verifying and/or validating a machine learning model, the method comprises:
- providing (S1) an input text prompt descriptive for the content of the video data to be generated;
- decomposing (S2) the provided text prompt into at least two text sub-prompts by a large language model;
- generating (S3) a text embedding for each of the at least two text sub-prompts; and
- generating (S4) synthetic video data by a Video Diffusion Model based on the generated text embeddings.

100

S1

S2

S3

S4

**Fig. 1**

**EP 4 621 609 A1**

**Description**

The invention relates to a method and a device for generating synthetic video data form a text prompt, particularly for providing video data for training and/or testing and/or verifying and/or validating a machine learning model.

State of the art

Generative AI has gained significant interests in recent years. Many efforts have been devoted to text-to-image (T2I) generation, while more recent works, e.g., AnimateDiff, VideoCrafter, made the attempts to extend the T2I backbone by adding temporal modules for video generation.

More specifically, they are built upon the popular T2I model Stable Diffusion (SD), which is a diffusion model, trained in the latent space of an autoencoder. However, the 2D UNet of SD can only process image data batches. To make the model suitable for video generation, text to video diffusion models (T2V) incorporate a temporal transformer to capture the temporal coherency.

However, current T2V models fail to synthesize visual processes involving drastic visual changes, and tend to generate one single state, without the gradual evolvement. For example, for a prompt like "A boy is getting old", the known T2V models tend to generate the initial state, i.e., "a young boy" only, thereby, not showing any suitable, temporal transformation for the process of the boy getting older. Reasons for this are suboptimal language guidance and flawed temporal attention.

Instead of operating in the image space, Stable Diffusion (SD) operates in the latent space of an autoencoder. Firstly, the autoencoder E maps the given image x into a spatial latent code $z = E(x)$, then z is mapped back to the image space by the decoder D. The autoencoder is trained to reconstruct the given image, i.e., $D(E(x)) \approx x$.

In a second stage, the diffusion model is trained in this latent space Z. The diffusion model consists of a forward diffusion process and a backward denoising process. The forward pass thereby is a Markov chain to gradually add Gaussian noise to the clean data. Thereby, the noisy latent can be computed in a closed form. The reverse denoising process can be parameterized by another Gaussian distribution.

During the denoising process, the diffusion model can be conditioned on an additional input vector. In SD, this additional input is typically a text encoding produced by a frozen CLIP text encoder. Given a prompt and its encoded vector, the UNet model is trained to minimize a specific loss function.

Furthermore, video diffusion models (VDMs) such as VideoCrafter1 and VideoCrafter2 are built on top of the prior T2I model, i.e., Stable Diffusion, which consists of convolutional layers and spatial transformer. To capture the temporal coherency for video generation, VDMs additionally incorporate temporal transformers. Given the desired number of frames of the video, VDMs jointly process all frames in one batch, i.e., denoising based on a spatial size of each frame and a feature dimension. Inherited from the T2I model, the text prompt is firstly encoded by a frozen text encoder such as CLIP text encoder, afterward the text embedding is further injected via cross-attention in the spatial transformer. More specifically, the same text embedding is replicated L times and used by all frames.

It is an object of the invention to provide an optimized and/or more exact method for text to video generation, in particular, for generation and augmentation of training and/or testing data.

The object is solved by the method according to the features of claim 1. The object is further solved by the device according to the features of claim 10.

Disclosure of the invention

According to a first aspect, there is provided a method for generating synthetic video data form a text prompt, particularly for providing video data for training and/or testing and/or verifying and/or validating a machine learning model, the method comprises:

- providing an input text prompt descriptive for the content of the video data to be generated;
- decomposing the provided text prompt into at least two text sub-prompts by a large language model;
- generating a text embedding for each of the at least two text sub-prompts; and
- generating synthetic video data by a Video Diffusion Model based on the generated text embeddings.

It is understood that the steps according to the invention as well as further optional steps do not necessarily have to be carried out in the sequence shown, but can also be carried out in a different sequence. Furthermore, further intermediate steps may be provided. Moreover, the individual steps may comprise one or more substeps without thereby leaving the scope of the method according to the invention.

According to a second aspect, there is provided a device for generating synthetic video data form a text prompt, particularly for providing video data for training and/or testing and/or verifying and/or validating a machine learning model, the device comprises an evaluation and computing unit configured to perform the following steps:

- providing an input text prompt descriptive for the content of the video data to be generated;
- decomposing the provided text prompt into at least two text sub-prompts by a large language model;
- generating a text embedding for each of the at least two text sub-prompts; and
- generating synthetic video data by a Video Diffusion Model based on the generated text embeddings.

The statements made for the procedure apply accordingly to the device. It is understood that linguistic modifications of features formulated in accordance with the procedure can be reformulated for the device in accordance with standard linguistic practice without such formulations having to be explicitly listed here.

Despite the architecture changes compared to T2I models, current T2V models still use the same single text prompt for all frames. This is suboptimal for video generation, as a visual process can have different visual states, which should be described individually. For example, coming back to the text prompt "A boy is getting old" named in the introduction, this aging process comprises a series of visual changes, e.g., from "a young boy", to "a middle-aged man" and eventually becomes "an elderly man". To better synthesis such a visual process, the proposed method leverages the Large Language Model (LLM), e.g., ChatGPT, to transform the original / provided single text prompt into several, preferably at least two, descriptive text subprompts. Each text subprompt preferably describes one specific visual state of the to be generated video. In other words, the method leverages the general knowledge of Large Language Model (LLM) to recaption the simple input text prompt by decomposing it into highly descriptive subprompts. With the aid of an LLM, more fine-grained description of sequential visual states in the video data can be obtained. More specifically, the in-context learning ability of an LLM is leveraged and the LLM is instructed with a concrete example and be specific about the text prompt style.

One instruction example is as follows: A text prompt "a boy is getting old" is provided for synthetic video data generation. The LLM can then be asked or process internally the following: "Can you split the process of aging and describe the states of aging separately?" The LLM is further limited in that each state is to be described in only one sentence and the coherency between subprompts is to be considered. Also, the LLM shall produce the subprompts straightforward not using a narrative style. The outputted subprompts may the look like, for example, "a young boy", to "a middle-aged man" and "an elderly man". A further example, for the text prompt "a woman is getting fat", the LLM can divide this initial input into two states, e.g., "a thin woman" and "a fat woman". The number of states is of course not limited to two.

After obtaining the subprompts from the LLM, the method further gets / generates the text embeddings corresponding to each subprompt.

A large language model (LLM) is a type of artificial intelligence (AI) program designed to understand, generate, and work with human language. It's "large" because it's built upon a vast amount of text data and involves millions or even billions of parameters that it uses to make predictions about language. These models are trained on a diverse range of internet text sources. The training process involves showing the model examples of text and teaching it to predict the next word in a sentence based on the words that come before it. Over time, through a process called machine learning, the model gets better at making these predictions. This ability to predict the next word enables LLMs to generate coherent and contextually relevant text, translate languages, summarize texts, answer questions, and perform many other language-related tasks. One of the key features of large language models is their capacity for "few-shot" or "zeroshot" learning, where they can perform tasks they were not explicitly trained to do, simply by understanding the instructions given in natural language. This flexibility makes them incredibly powerful tools for a wide range of applications, from writing assistance to customer service automation. GPT (Generative Pretrained Transformer) models developed by OpenAI are prominent examples of large language models. They have received significant attention for their ability to generate human-like text and perform a variety of language understanding and generation tasks with a high degree of proficiency.

A video diffusion model (VDM) is an extension of diffusion models applied to the generation and processing of video data. Diffusion models, originally developed for tasks like image generation and editing, are a class of generative models that learn to create data resembling the distribution of a training set. These models work by gradually transforming a sample of random noise into a structured output (such as an image or video) through a series of steps or iterations, effectively "denoising" the input. In the context of video, a video diffusion model learns to generate or manipulate video sequences instead of static images. This involves understanding and modeling the complexities of temporal dynamics and visual consistency across frames, which is significantly more challenging than image generation due to the additional dimension of time. The VDM must learn not only the appearance of objects within each frame but also how they move and change over time, maintaining coherence and continuity across the sequence of frames that make up a video. Video diffusion models are trained on large datasets of video clips, learning to predict the next frame in a sequence given previous frames, or to generate entire sequences from a noise distribution. These models can be used for a variety of applications, including video synthesis, where new video clips are generated from scratch; video editing, such as altering the content of existing videos; and video super-resolution, where the quality of video clips is enhanced.

Generating a text embedding for each of the at least two text sub-prompts refers to the process of transforming specific segments of text, known as subprompts, into numerical representations, called embeddings. This process is fundamental in natural language processing (NLP) and machine learning, enabling computers to understand and work with human language.

A "text embedding" is a high-dimensional vector that captures the semantic meaning, syntactic structure, and context of the text. When embeddings for text sub-prompts are generated, these discrete snippets of text into a continuous vector space are effectively mapped. Each dimension of the embedding vector represents a latent feature of the text, often learned from large datasets during the training of a language model. These are smaller, distinct parts of a larger text prompt or query. For example, if the main prompt is about describing a scene in a forest, sub-prompts could focus on specific aspects, like the types of trees, the weather, or the time of day. This involves using the pre-trained language model to process the sub-prompts. The LLM analyzes the text and outputs a fixed-size vector for each sub-prompt. These vectors serve as the numerical representation of the sub-prompts' content and context.

The invention is focused on processing and/or augmenting sensor data with a focus on classification, object detection, and/or semantic segmentation model training tasks. The video data generated by this method can be used to enhance training of a machine learning model to identify various elements within the data, such as traffic signs, road surfaces, pedestrians, vehicles, and other object classes like trees and the sky. Additionally, it can enhance performance machine learning models to perform video and audio analysis for regression tasks, enabling it to determine continuous values such as distance, velocity, acceleration, and track objects within the video data. This is particularly done by providing a strategy of producing more accurate training data for such machine learning models. The invention can be used to augment and/or produce video data similar to video data that are derived from radar sensors, lidar sensors, ultrasonic sensors, motion sensors and/or thermal sensors.

The invention may be used as a method for efficiently selecting and transmitting (training) data from a technical system to a back-end computer, aiming to reduce data traffic. This selective data transmission is primarily intended for enhancing machine learning (ML) systems by providing data for training, testing, verifying, and validating these ML systems. The invention may also act as an upstream component in the machine learning toolchain, emphasizing its role in preparing ML systems. The invention may be used for generating augmented training data and/or augmented test and/or validation and/or verification data. Once the ML system is trained using the augmented data generated by the present method and device, the ML system can be applied to downstream tasks showing an enhanced performance.

In another aspect, the text sub-prompts decompose the text prompt to describe sequential visual states of the content to be generated as the video data, wherein the sequential visual states of the content are to be represented in the generated video data by at least two frames.

"Text sub prompts" refer to breaking down a larger, more complex text prompt into smaller, more manageable pieces. These sub prompts are designed to capture specific details or aspects of the scene or content that is intended to be visualized in the video. The sub-prompts are used to describe different moments or states in a sequence that unfolds over time. Each state represents a specific point in the narrative or visual progression of the content that will be depicted in the video. This sequential nature is crucial for generating content that has a coherent flow, akin to how a story progresses or how a scene changes over time. The goal of decomposing the text prompt into sub-prompts is to create video data. This means transforming the textual descriptions into visual representations that make up the frames of a video. The mention of "at least two frames" underscores that the generated video data will consist of multiple frames, which are necessary to depict the sequential visual states described by the subprompts. A single frame could represent a static image, but multiple frames are required to convey motion, change, or the progression of time, which are essential elements of video content.

In another aspect, the method further comprises interpolating between two adjacent generated text embeddings to derive a text embedding for another intermediate frame of the to be generated video data.

The "two adjacent generated text embeddings" preferably refer to the embeddings corresponding to two consecutive frames or scenes in the video. These frames are "adjacent" in the sense that they are next to each other in the sequence of the video, representing consecutive moments or states in the narrative or visual progression. Interpolation preferably involves calculating or generating intermediate values between the two adjacent text embeddings. This mathematical process preferably aims to create a smooth transition between the semantic content represented by the two embeddings. By interpolating between these embeddings, the method generates new embeddings that represent intermediate states or scenes that logically fit between the two original frames. The result of the interpolation process is a new text embedding that represents the content for an intermediate frame in the video. This frame is not directly described by the original text prompts but is generated to create smoother visual or narrative transitions in the video content. Thus, interpolation is done between the generated text/ language embeddings, preferably, between each state. The interpolated text embeddings are preferably fed as conditional textual embedding for each frame. In this way, the text to video model has more explicit guidance regarding the visual states along the temporal dimension and thus can better generate the desired videos.

In another aspect, the Video Diffusion Model comprises convolutional layers, at least one spatial transformer and at least one temporal transformer, wherein the method further comprises:

- extracting an attention map form the temporal transformer;
- providing a delta attention map for regularization of the extracted attention map; and

- regularizing the attention map based on the delta attention map.

The "attention map" in the context of a video diffusion model refers to a mechanism or visualization that shows how different parts of the video frame or sequence are being weighted or focused on by the model during its processing or generation tasks. Video diffusion models, which are extensions of diffusion models adapted for video generation, rely on capturing both spatial and temporal dependencies within video data to generate or manipulate video sequences effectively. Attention mechanisms within these models allow the network to focus on specific parts of the input data (in this case, frames of a video or text embeddings) more than others when performing a task. This enables the VDM to prioritize relevant spatial features (e.g., objects, shapes) and temporal features (e.g., movements, changes over time) that are crucial for understanding the scene and generating coherent video content. The attention map is essentially a visualization or representation of these focus areas, showing where the model is "paying attention" to at any given time during the video processing. It can highlight spatial attention, naming which areas within a single frame are being focused on. This can help in understanding how the model perceives different objects and elements within the scene. Also, it can highlight temporal attention, naming how the model's focus shall shift across frames. This can reveal how the model tracks movement and changes over time, which is vital for capturing the dynamic nature of video content.

The provided method also shows a measure to regularize temporal attention layers to further enforce a desired visual pattern. Whereas former VDMs attend too much on the specific frames, e.g., the initial frame, and thus often generate video data consisting only of similar frames, the provided aspect mitigates this issue by defining an additional delta attention map, which is added to and/or processed with the (previous) temporal attention map. By employing such regularization, some prior information on the desired visual pattern is included, and thus more appealing results in the generated video data are achieved. Thus, in addition to the recaptioning, a temporal attention regularization strategy is provided. The temporal attention maps may be visualized, as temporal attention plays a crucial role in modeling the temporal relationship between frames of video data. As the input of the temporal transformer of the VDM, the features are firstly rearranged into (h $\times$ w, L, c), where the spatial dimension is considered as the batch dimension. Therefore, temporal attention is preferably self-attention between L frames. These intermediate features are then projected to the queries (Q), keys (K) and values(V). The attention map is then preferably computed by

$$A = Softmax\left(\frac{QK^T}{\sqrt{d}}\right).$$

After reshaping, the attention map A preferably has the shape of $R^{L \times L}$, where L is the number of frames. The attention maps created / generated in this way may not be very structured, as often too much attention is paid to the initial frames instead of the neighboring frames. Thus, the VDM tends to synthesize frames that resemble the initial states leading to converged similar appearance, despite applying various prompt condition. This drawback may come from the training process of the VDM, where the training video clips are usually short and dynamic movement is limited, thus the trained VDM can attend too much to the specific frame. To mitigate this drawback, the present method may regularize the temporal attention map at inference time. More specifically, to encourage the model to synthesize more drastic visual changes in the video data, a delta attention map $\Delta A$ can be defined. The delta attention map can be defined manually. Thereby, the attention distribution along a diagonal offset direction may be modelled as a Gaussian distribution, i.e.,

$$f(k) = \frac{1}{\sigma\sqrt{2\pi}}e^{-\frac{1}{2}\left(\frac{k}{\sigma}\right)^2}$$

where $k \in \{0, 1, ..., L2\}$ is the offset distance from the diagonal and $\sigma$ is the standard deviation.

In another aspect, the regularizing the attention map comprises:

- transforming the extracted attention map and the delta attention map based on an affine transformation; or

summing the extracted attention map with the delta attention map multiplied by a scaling factor.

The updated attention map may be formulated as a transformation based on the original attention map A and the delta map $\Delta A$:

$$A' \leftarrow F(A, \Delta A),$$

where F represents the affine transformation.

Alternatively, a summation operation can be performed, i.e.,

$$A' \leftarrow A + \alpha\Delta A,$$

where $\alpha$ is a scaling factor.

The delta attention map may also be created automatically, i.e., based on a pretrained machine learning model. The delta attention map may have a diagonal matrix like representation. However, other alternative delta attention map may be employed to enforce different video patterns, e.g., looped video, and the like.

In another aspect, the providing the delta attention map for regularization of the extracted attention map comprises:

- obtaining the delta attention map from a reference video by computing a correlation between visual features of the reference video extracted from a pretrained visual encoder, in particular, a CLIP image encoder.

If a reference video is given, the delta attention map may be obtained by computing the correlation between visual features extracted from a pretrained visual encoder, e.g., CLIP image encoder. It is to be noted that different delta attention matrices may be applied at different resolution to achieve more fine-grained control. Attention at different resolution may control appearance and/or color and/or style and/or content and/or layout, respectively. Therefore, the attention maps may be manipulated individually at different resolution, depending on what the user wants to generate, with respect to the style and/or the content change in the video data.

In another aspect, the providing the delta attention map for regularization of the extracted attention map comprises:

- training an adaptation network to extract a learnable delta attention map and an affine transformation to capture a dynamic pattern in the video data and to learn the attention regularization.

Besides direct regularization, when paired of text-video data are available, one may train an adaptation network f to learn the attention regularization effect, e.g., learnable delta attention matrix and the affine transformation, to better capture the dynamic pattern:

$$A' = f(Wp, V, A),$$

where Wp and V represents the text embedding and the training video, respectively.

To summarize, by the provided method there are proposed to two main strategies, i.e., recaptioning and temporal attention regularization to improve the pretrained text-to-video diffusion models, leading to appealing visual effects well complying with the input prompt.

In another aspect, there is provided a computer program comprising program code to execute at least parts of the method according to the invention in one of its embodiments, when the computer program is executed on a computer. In other words, according to the invention, a computer program (product) comprising instructions which, when the program is executed by a computer, cause the computer to execute the method/steps of the method according to the invention in one of its embodiments.

In another aspect, there is provided a computer-readable medium comprising program code of a computer program is also proposed for executing at least parts of the method according to the invention in one of its embodiments when the computer program is executed on a computer. In other words, the invention relates to a computer-readable (storage) medium comprising instructions which, when executed by a computer, cause the computer to execute the method/steps of the method according to the invention in one of its embodiments.

The described embodiments and further developments can be combined with each other as desired.

Further possible embodiments, further developments and implementations of the invention also comprise combinations of features of the invention described before or below with respect to the embodiments that are not explicitly mentioned.

Brief description of the drawings

The accompanying drawings are intended to provide a further understanding of embodiments of the invention. They illustrate embodiments and, in connection with the description, serve to explain principles and concepts of the invention.

Other embodiments and many of the advantages mentioned will result with regard to the drawings. The elements shown in the drawings are not necessarily shown to scale with each other.

It is shown in:

Fig. 1    a schematic flowchart of a method for generating synthetic video data form a text prompt;

Fig. 2    a video diffusion model according to the state of the art;

Fig. 3    a box diagram of a method for generating synthetic video data form a text prompt;

Fig. 4    a schematic representation of regularizing attention maps;

Fig. 5    alternative delta attentions maps; and

Fig. 6    an example of a generated video content consisting of 16 frames.

In the figures of the drawings, identical reference signs designate identical or functionally identical elements, parts or components, unless otherwise indicated.

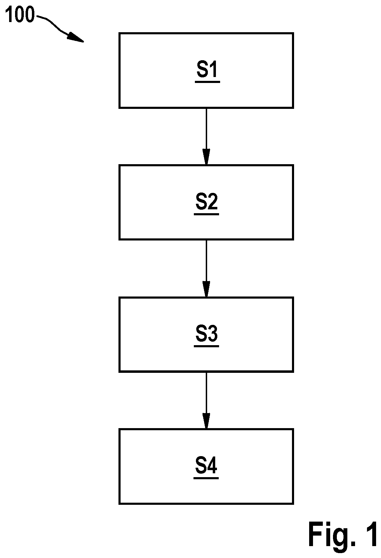

Figure 1 shows a schematic flowchart of a method for generating synthetic video data form a text prompt, particularly for providing video data for training and/or testing and/or verifying and/or validating a machine learning model.

In any embodiment, the method can be carried out at least in part by a device 100, which for this purpose can comprise several components not shown in more detail, for example one or more provisioning units and/or at least one evaluation and computing unit. It is understood that the provisioning device may be formed together with the evaluation and computing unit, or may be different therefrom. Furthermore, the device may comprise a storage unit and/or an output unit and/or a display unit and/or an input unit, especially for providing the text prompt.

According to the invention, the computer-implemented method comprises at least the following steps: In a step S1, the method comprises providing an input text prompt descriptive for the content of the video data to be generated.

In a step S2, the method comprises decomposing the provided text prompt into at least two text subprompts by a large language model.

In a step S3, the method comprises generating a text embedding for each of the at least two text subprompts.

In a step S4, the method comprises generating synthetic video data by a Video Diffusion Model based on the generated text embeddings.

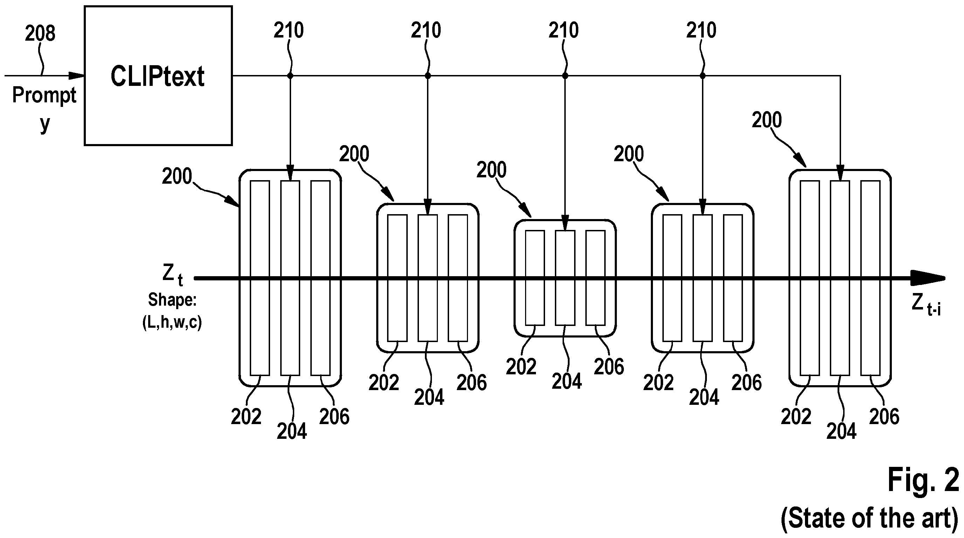

Fig. 2 shows a video diffusion model (VDM) 200 according to the state of the art. The Video Diffusion Model 200 comprises convolutional layers 202, spatial transformers 204 and temporal transformers 206. The generation of the video data by the VDM 200 is shown on a time axis $z_t$ to $z_{t-1}$. For each frame along the time axis, there is presented one representation of the VDM 200. In the state of the art, each frame, that is processed by the VDM 200 gets a text prompt y, 208 that may be transformed into a text embedding 210 as an input. The transformation into a text embedding may be done by a $CLIP_{text}$ model. In the state of the art, for each frame, the same text prompt is provided.

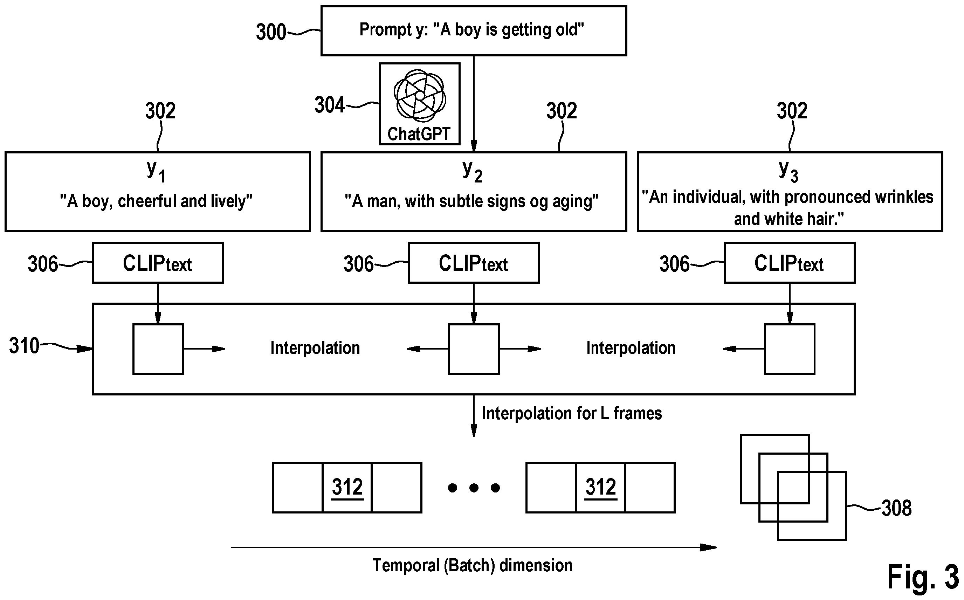

Fig. 3 shows a method according to the invention. Therein, an initially provided text prompt 300 is decomposed into at least two (in Fig. 3 three) text subprompts 302 by a large language model 304. A text embedding 306 for each of the at least two text subprompts 302 is generated. The transformation / generation into the respective text embedding 306 may be done by a $CLIP_{text}$ model. Based on the generated text embeddings 306, synthetic video data 308 is generated by a pretrained Video Diffusion Model 310. According to Fig. 3, interpolation between two adjacent generated text embeddings 306 is done to derive interpolated text embeddings 312 for another intermediate frame of the to be generated video data. The interpolation may be done for L frames.

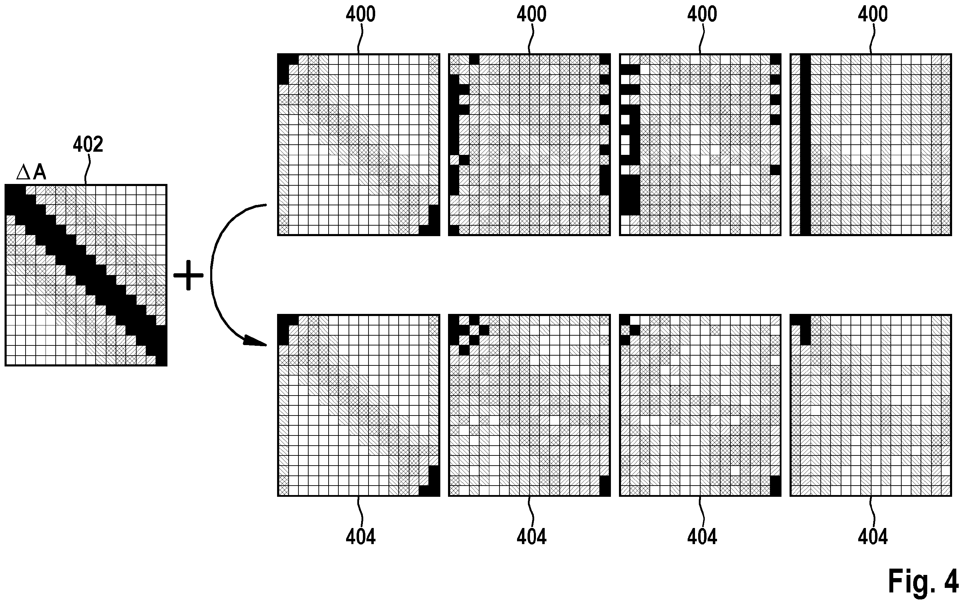

Fig. 4 shows regularization of an attention map 400 (also to be named as attention matrix). As named for Fig. 2, the Video Diffusion Model 200, 310 comprises convolutional layers, at least one spatial transformer and at least one temporal transformer. The attention map(s) 400 is extracted form the temporal transformer, preferably for each frame or between each two adjacent frames. Furthermore, a delta attention map 402 for regularization of the extracted attention map 400 is provided. The delta attention map 402 can be provided manually. The attention map(s) 400 is (are each) regularized based on the delta attention map 402 to get a regularized attention map(s) 404. In Fig. 4, the delta attention map 402 has the shape of an diagonal matrix.

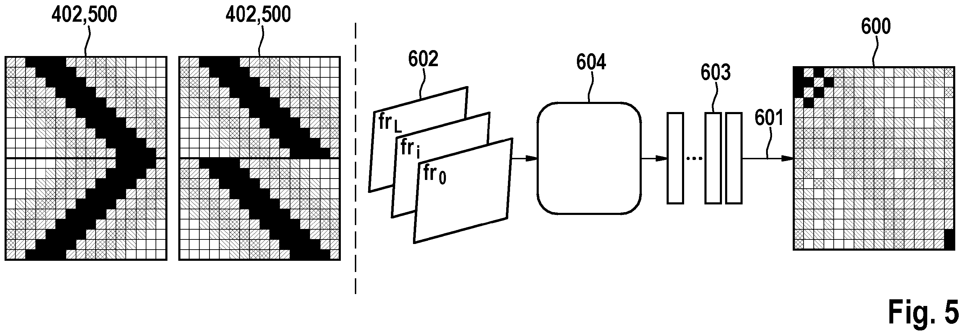

Fig. 5 shows further possible delta attention maps 402. One alternative delta attention map 500 shows a V-shape and represents regularization of a video content that shows a cycle, i.e. a young man growing old and getting young again. Another alternative delta attention map 502 shows a parallel stripe shape and represents regularization of a video content that shows a repeating pattern, i.e., a young man growing old followed again by the young man growing old.

As shown in Fig. 5 as well, the providing the delta attention map 402 for regularization of the extracted attention map 400 can be achieved by obtaining the delta attention map 600 from a reference video 602 by computing 601 a correlation between visual features 603 for each frame of the reference video 602 extracted from a pretrained visual encoder 604, in particular, a CLIP image encoder.

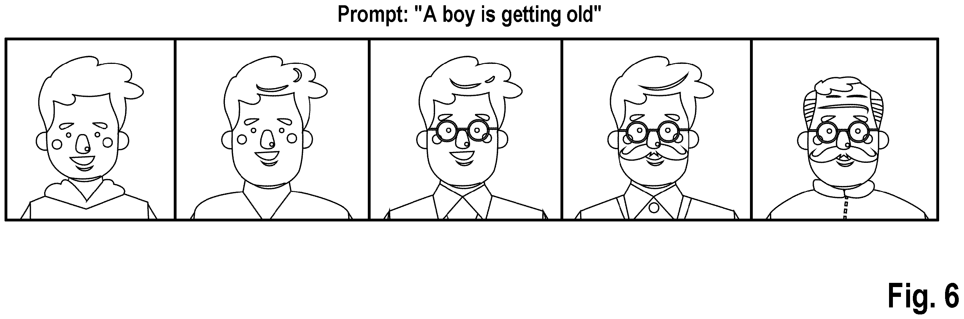

Fig. 6 shows an example of a generated video data content consisting of 16 frames. The generated synthetic video data shows a boy that is getting older. The preciseness of the generated content is enhanced by the presented method, i.e., by generating the video based on the sub prompts and by regularizing the attention maps by a delta attention map.

**Claims**

1. A method for generating synthetic video data form a text prompt, particularly for providing video data for training and/or testing and/or verifying and/or validating a machine learning model, the method comprises:

    - providing (S1) an input text prompt descriptive for the content of the video data to be generated;
    - decomposing (S2) the provided text prompt into at least two text subprompts by a large language model;
    - generating (S3) a text embedding for each of the at least two text sub-prompts; and
    - generating (S4) synthetic video data by a Video Diffusion Model based on the generated text embeddings.

2. The method of claim 1, wherein the text sub-prompts decompose the text prompt to describe sequential visual states of the content to be generated as the video data, wherein the sequential visual states of the content are to be represented in the generated video data by at least two frames.

3. The method of claim 1 or 2, wherein the method further comprises interpolating between two adjacent generated text embeddings to derive a text embedding for another intermediate frame of the to be generated video data.

4. The method of any one of preceding claims, wherein the Video Diffusion Model comprises convolutional layers, at least one spatial transformer and at least one temporal transformer, wherein the method further comprises:

   - extracting an attention map form the temporal transformer;
   - providing a delta attention map for regularization of the extracted attention map; and
   - regularizing the attention map based on the delta attention map.

5. The method of claim 4, wherein the regularizing the attention map comprises:

   - transforming the extracted attention map and the delta attention map based on an affine transformation; or
   summing the extracted attention map with the delta attention map multiplied by a scaling factor.

6. The method of claim 4, wherein the providing the delta attention map for regularization of the extracted attention map comprises:

   - obtaining the delta attention map from a reference video by computing a correlation between visual features of the reference video extracted from a pretrained visual encoder, in particular, a CLIP image encoder.

7. The method of claim 4, wherein the providing the delta attention map for regularization of the extracted attention map comprises:

   - training an adaptation network to extract a learnable delta attention map and an affine transformation to capture a dynamic pattern in the video data and to learn the attention regularization.

8. A computer program comprising program code to perform at least portions of a method according to any one of claims 1 to 7, when the computer program is executed on a computer.

9. A computer-readable medium containing program code of a computer program for executing at least parts of a method according to any one of claims 1 to 7, when the computer program is executed on a computer.

10. Device (100) for generating synthetic video data form a text prompt, particularly for providing video data for training and/or testing and/or verifying and/or validating a machine learning model, the device (100) comprises an evaluation and computing unit configured to perform the following steps:

   - providing an input text prompt descriptive for the content of the video data to be generated;
   - decomposing the provided text prompt into at least two text subprompts by a large language model;
   - generating a text embedding for each of the at least two text subprompts; and
   - generating synthetic video data by a Video Diffusion Model based on the generated text embeddings.

**Amended claims in accordance with Rule 137(2) EPC.**

1. A method for generating synthetic video data form a text prompt, particularly for providing video data for training and/or testing and/or verifying and/or validating a machine learning model, the method comprises:

   - providing (S1) an input text prompt descriptive for the content of the video data to be generated;
   - decomposing (S2) the provided text prompt into at least two text sub-prompts by a large language model;
   - generating (S3) a text embedding for each of the at least two text sub-prompts; and
   - generating (S4) synthetic video data by a Video Diffusion Model based on the generated text embeddings,

      wherein the Video Diffusion Model comprises convolutional layers, at least one spatial transformer and at least one temporal transformer,
      wherein the method further comprises:

         o extracting an attention map from the temporal transformer to capture a temporal coherency;
         o providing a delta attention map for regularization of the extracted attention map, the delta attention map comprising prior information on a desired visual pattern; and
         o regularizing the attention map based on the delta attention map,

wherein the providing the delta attention map for regularization of the extracted attention map comprises:

    o obtaining the delta attention map from a reference video by computing a correlation between visual features of the reference video extracted from a pretrained visual encoder, in particular, a CLIP image encoder.

2. The method of claim 1, wherein the text sub-prompts decompose the text prompt to describe sequential visual states of the content to be generated as the video data, wherein the sequential visual states of the content are to be represented in the generated video data by at least two frames.

3. The method of claim 1 or 2, wherein the method further comprises interpolating between two adjacent generated text embeddings to derive a text embedding for another intermediate frame of the to be generated video data.

4. The method of claim 1, wherein the regularizing the attention map comprises:

    - transforming the extracted attention map and the delta attention map based on an affine transformation; or
    summing the extracted attention map with the delta attention map multiplied by a scaling factor.

5. The method of claim 1, wherein the providing the delta attention map for regularization of the extracted attention map comprises:

    - training an adaptation network to extract a learnable delta attention map and an affine transformation to capture a dynamic pattern in the video data and to learn the attention regularization.

6. A computer program comprising program code to perform at least portions of a method according to any one of claims 1 to 5, when the computer program is executed on a computer.

7. A computer-readable medium containing program code of a computer program for executing at least parts of a method according to any one of claims 1 to 5, when the computer program is executed on a computer.

8. Device (100) for generating synthetic video data form a text prompt, particularly for providing video data for training and/or testing and/or verifying and/or validating a machine learning model, the device (100) comprises an evaluation and computing unit configured to perform the following steps:

    - providing an input text prompt descriptive for the content of the video data to be generated;
    - decomposing the provided text prompt into at least two text sub-prompts by a large language model;
    - generating a text embedding for each of the at least two text sub-prompts; and
    - generating synthetic video data by a Video Diffusion Model based on the generated text embeddings

    wherein the Video Diffusion Model comprises convolutional layers, at least one spatial transformer and at least one temporal transformer,
    wherein the method further comprises:

        o extracting an attention map form the temporal transformer;
        o providing a delta attention map for regularization of the extracted attention map; and
        o regularizing the attention map based on the delta attention map,

    wherein the providing the delta attention map for regularization of the extracted attention map comprises:
    obtaining the delta attention map from a reference video by computing a correlation between visual features of the reference video extracted from a pretrained visual encoder, in particular, a CLIP image encoder.

100

```
┌─────────────┐
│     S1      │
└─────────────┘
       │
       ▼
┌─────────────┐
│     S2      │
└─────────────┘
       │
       ▼
┌─────────────┐
│     S3      │
└─────────────┘
       │
       ▼
┌─────────────┐
│     S4      │
└─────────────┘
```

Fig. 1

Fig. 2
(State of the art)

EP 4 621 609 A1

300 — Prompt y: "A boy is getting old"

304 — ChatGPT

302

$y_1$

"A boy, cheerful and lively"

302

$y_2$

"A man, with subtle signs og aging"

302

$y_3$

"An individual, with pronounced wrinkles and white hair."

306 — CLIPtext

306 — CLIPtext

306 — CLIPtext

310 — Interpolation    Interpolation

Interpolation for L frames

312    • • • •    312

308

Temporal (Batch) dimension

Fig. 3

Fig. 4

EP 4 621 609 A1

Fig. 5

Prompt: "A boy is getting old"

Fig. 6

## EUROPEAN SEARCH REPORT

**Application Number**

EP 24 16 4422

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAN LIN ET AL: "VideoDirectorGPT: Consistent Multi-scene Video Generation via LLM-Guided Planning", ARXIV.ORG, CORNELL UNIVERSITY LIBRARY, 201 OLIN LIBRARY CORNELL UNIVERSITY ITHACA, NY 14853, 26 September 2023 (2023-09-26), XP091623860, * sections 2-4; figures 1-6 * | 1-10 | INV. G06F18/213 G06F16/245 G06F16/33 G06T11/00 G06V10/774 G06V10/82 |
| L | JIUNIU WANG ET AL: "ModelScope Text-to-Video Technical Report", ARXIV.ORG, CORNELL UNIVERSITY LIBRARY, 201 OLIN LIBRARY CORNELL UNIVERSITY ITHACA, NY 14853, 12 August 2023 (2023-08-12), XP091592327, * sections 3 and 4; figures 1-4 * | | |
| A | SUSUNG HONG ET AL: "Large Language Models are Frame-level Directors for Zero-shot Text-to-Video Generation", ARXIV.ORG, CORNELL UNIVERSITY LIBRARY, 201 OLIN LIBRARY CORNELL UNIVERSITY ITHACA, NY 14853, 1 June 2023 (2023-06-01), XP091525526, * sections 3 and 4; figures 1-4 * | 1-10 | **TECHNICAL FIELDS SEARCHED (IPC)** G06F G06T G06V |

The present search report has been drawn up for all claims

| Place of search | Date of completion of the search | Examiner |
|---|---|---|
| The Hague | 23 July 2024 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)